# EUROPÄISCHE PATENTSCHRIFT

(11) **EP 2 114 188 B1**
(45) Veröffentlichungstag und Bekanntmachung des Hinweises auf die Patenterteilung: **20.12.2017**
(21) Anmeldenummer: 07815175.0
(22) Anmeldetag: 12.11.2007
(51) Int. Cl.: A43C 1/00

(54) **SCHNÜRSYSTEM FÜR SCHUHE**
FASTENING SYSTEM FOR SHOES
SYSTÈME DE LAÇAGE DE CHAUSSURES

(30) Priorität: 31.01.2007 AT 1552007
(43) Veröffentlichungstag der Anmeldung: 11.11.2009
(73) Patentinhaber: Fischer Sports GmbH, 4910 Ried im Innkreis (AT)
(72) Erfinder: LÜZLBAUER, Adolf, A-4853 Steinbach am Attersee (AT)
(74) Vertreter: Sonn & Partner Patentanwälte
(86) Internationale Anmeldenummer: PCT/AT2007/000508
(87) Internationale Veröffentlichungsnummer: WO 2008/092175

(56) Entgegenhaltungen:
- EP-A- 1 618 929
- WO-A-00/53045
- DE-A1- 10 239 927
- DE-A1- 19 710 702
- DE-U1- 20 316 425

## Beschreibung

Die Erfindung betrifft ein Schnürsystem für Schuhe aller Art, insbesondere für Sportschuhe, mit einem Schuhband, wobei zwei Enden zum Zusammenziehen des Schuhs vorgesehen sind und der Verlauf des Schuhbandes zumindest im Rist- und Ballenbereich kreuzungsfrei ist, wobei die stirnseitige Öffnung zum Einstieg in den Schuh mäanderförmigen Verlauf aufweist und die Öffnung zum Einstieg in den Schuh ineinandergreifende Lappen aufweist. Üblicherweise sind Schnürsysteme so ausgebildet, dass die Schnürsenkel durch Schlaufen oder Ösen od. dgl. geführt werden und wechselweise auf der linken und rechten Seite des Schuhschaftes umgelenkt werden und sich dementsprechend naturgemäß überkreuzen. Ein Nachteil dieses Systems tritt vor allem dann auf, wenn der Schuh als Innenschuh verwendet wird, z.B. wenn der Innenschuh durch eine Schale abgedeckt ist. In diesem Fall treten an den Kreuzungspunkten der Schnürsenkel am Fuß Druckstellen auf. Um diesen Mangel zu beheben, werden häufig unterhalb der Schnürung Polsterungen eingebaut. Abhilfe können auch Zungen schaffen, die mit einer Polsterung versehen sind.

Aus der WO 00/53045 A1 ist ein andersartiges Schnürsystem für Schuhe mit mit Führungselementen versehenen Laschen bekannt, durch die ein im Zehenbereich fixiertes Schuhband geführt ist. Dieses Schnürsystem weist lediglich ein einziges freies Ende zum Zusammenziehen des Schuhs auf, das durch eine Verschlussvorrichtung geführt wird, die einen Druckknopf zum Freigeben bzw. Feststellen des Schuhbandes umfasst.

Durch die FR 2 722 659 A1 und die WO 1989/08411 A1 sind Schnürsysteme für Schuhe bekannt geworden, bei denen die Öffnung zum Einstieg in den Schuh ineinandergreifende Lappen mit Führungselementen an ihren Enden zur Umlenkung des Schuhbandes aufweist. Auch diese bekannten Schnürsysteme konnten keine Abhilfe schaffen.

Ein weiteres Schnürsystem ist aus der DE 197 10 702 A1 bekannt, bei dem selbstständig schließende, den Schnürsenkel fixierende Klemmvorrichtungen mit aufgerauter Klemmfläche vorgesehen sind. Die darin verwendeten Umlenkelemente umfassen abgerundete Auflageflächen, deren Krümmungsradius größer als der Durchmesser des Schnürsenkels ist.

Die EP 1 618 929 A1 beschreibt einen Rollschuh, der u.a. eine Schnürsenkelanordnung mit einer Mehrzahl von Führungselementen und einer Feststellvorrichtung aufweist. Der Schnürsenkel ist dabei in einen Vorderfuß- und einen Riststrang unterteilt, wodurch ein unterschiedliches Anziehen der Schnürsenkel ermöglicht wird.

In der DE 203 16 425 U1 ist eine Seilklemme zum Blockieren von Schnüren, Seilen und Bändern geoffenbart, bei der ein Seil durch Öffnungen in einem Gehäuse und um den Steg einer Lasche geführt wird, wobei die Lasche zum Lösen der Blockierung dient.

Schließlich zeigt die DE 102 39 927 A1 eine Schnürvorrichtung für Schuhe mit einer Spann- bzw. Verriegelungsvorrichtung zum Spannen und Lösen des Schnürsenkels, wobei die Spann- bzw. Verriegelungsvorrichtung dabei als Ratschen- oder Drehverschluss ausgeführt ist.

Aufgabe der Erfindung ist die Schaffung eines Schnürsystems, durch welches die Mängel der bisher bekannten Schnürsysteme behoben werden.

Diese Aufgabe wird durch die Maßnahme nach dem kennzeichnenden Teil des Anspruches 1 gelöst.

Durch die Maßnahme nach Anspruch 1 wird eine besonders flexible Konstruktion ermöglicht, welche einerseits eine hervorragende Ristanpassung sicherstellt, andererseits beim Abbiegen des Schuhes, beispielsweise beim Gehen, keine Faltenbildung des Obermaterials zulässt.

Die Öffnung zum Einstieg in den Schuh besitzt ineinadergreifende Lappen, welche an ihren Enden Führungselemente zur Umlenkung des Schuhbandes aufweisen.

Durch die ineinandergreifenden Lappen ist gemäß der Maßnahme nach Anspruch 2 der Abstand zwischen dem Führungselement 4 des Lappens 8 und dem zusätzlichen Element 9 steuerbar und als Folge daraus der Zugwinkel des Schuhbandes ebenfalls steuerbar, wodurch die Zugwirkung der Schnürung gezielt auf das Anforderungsprofil des Schuhes konstruierbar ist.

Weitere Vorteile werden durch die Maßnahmen nach den Unteransprüchen erzielt.

Weitere Merkmale der Erfindung werden anhand der Zeichnungen erläutert, in welchen Ausführungsbeispiele des bekannten und des erfindungsgemäßen Schnürsystems dargestellt sind.

Es zeigen:
- Fig. 1: eine Vorderansicht eines herkömmlichen Schnürschuhes;
- Fig. 2: den Schuh nach Fig. 1 in Seitenansicht;
- Fig. 3: einen Schuh nach dem Stand der Technik ohne Schuhbänder;
- Fig. 4: den erfindungsgemäßen Schnürschuh in Vorderansicht; und
- Fig. 5: ein Detail nach Fig. 4 in größerem Maßstab.

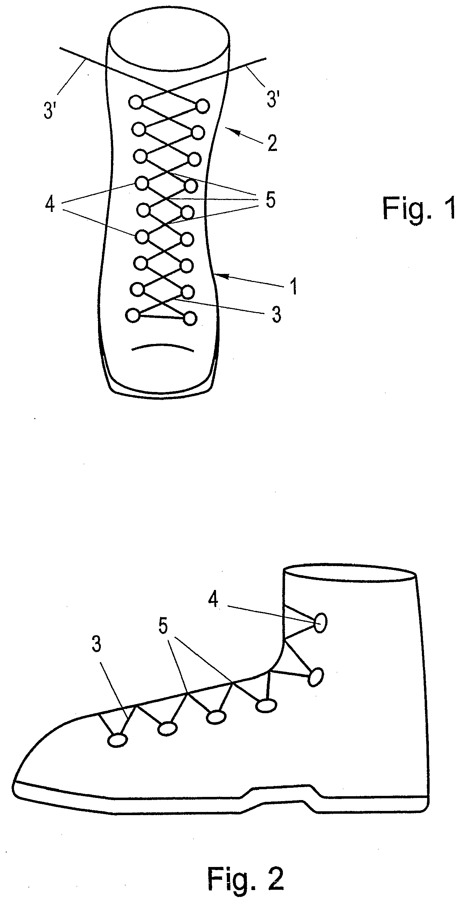

In Fig. 1 ist mit 1 der Ballen- und Ristbereich sowie mit 2 der Schaftbereich bezeichnet, welcher von den Sprunggelenken aufwärts führt. Mit 3 ist das Schuhband bezeichnet, welches durch Öffnungen 4 geführt ist. Diese Öffnungen 4 können in bekannter Weise als Ösen, Schlaufen, Haken, etc. ausgebildet sein.

Das Schuhband 3 kann wie im vorliegenden Fall aus einem Stück bestehen. Es kann aber auch aus zwei Teilen bestehen, wobei in einem solchen Fall das Schuhband im Spitzenbereich des Schuhes beidseitig, z.B. durch Knoten oder Vernähen, mit dem Obermaterial des Schuhes befestigt ist.

Die Enden 3' des Schuhbandes werden üblicherweise vom Benutzer verknotet. Deutlich zu erkennen sind die Kreuzungspunkte 5 des Schuhbandes.

Diese Kreuzungspunkte haben den Nachteil, dass sie bei fester Schnürung punktuelle Druckstellen erzeugen, welche besonders im empfindlichen Ristbereich des menschlichen Fußes bei fester Schnürung zu Schmerzen führen. Dementsprechend muss der Benutzer in diesem Fall die Schnürung lockern, wodurch der Halt des Fußes im Schuh verschlechtert wird, und es im schlimmsten Fall durch das Rutschen des Fußes im Schuh zu schmerzhaften Blasenbildungen kommt.

In der Darstellung des Schuhs nach Fig. 2 liegen die Kreuzungspunkte 5 des Schuhbandes 3 genau am Scheitel des Schuhes.

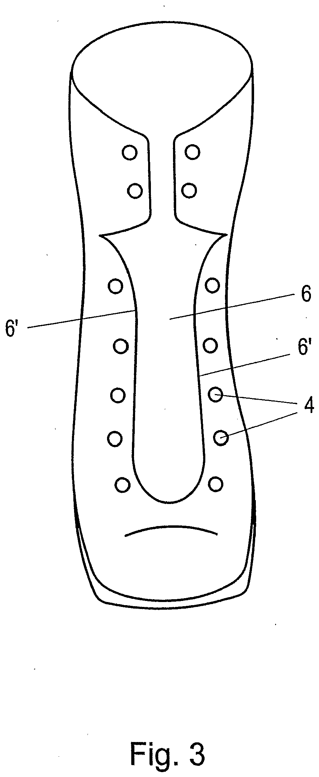

Bei der bekannten Ausführungsform des Schuhes nach Fig. 3 besitzt dieser Öffnungen 4 für das Schuhband sowie eine Öffnung 6, welche dazu dient, in Wechselwirkung mit der Schnürung durch das Schuhband den Schuh individuell an den Fuß des jeweiligen Benutzers anzupassen. Auf das Einzeichnen von Details, wie der sogenannten Wasserlasche, wurde der Übersicht halber verzichtet.

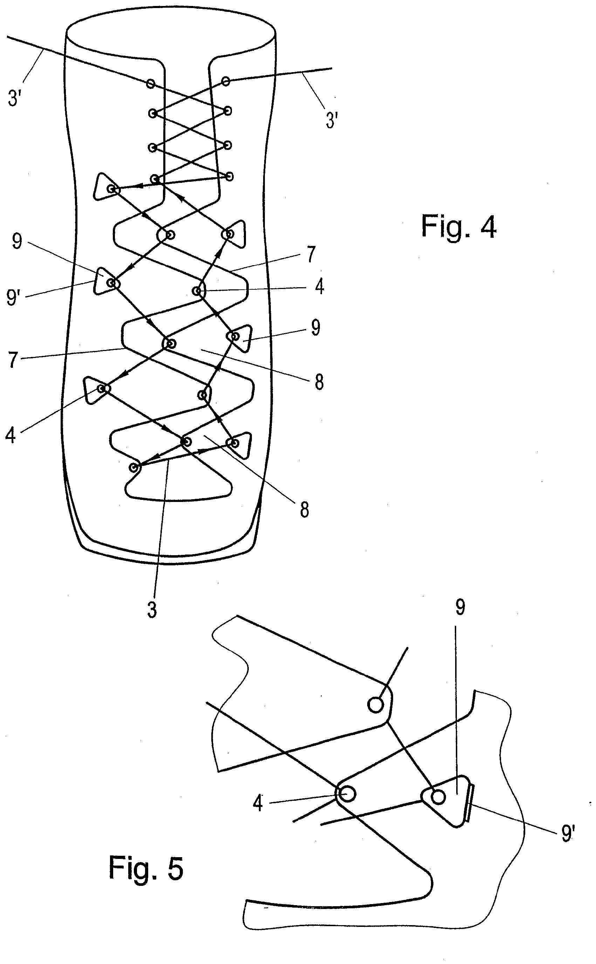

Beim erfindungsgemäßen Schuh nach den Fig. 4 und 5 ist der Verlauf der Öffnung 6 nicht wie in Fig. 3 durch parallele Begrenzungslinien, sondern durch einen mäanderförmigen Verlauf der Linien 7 ausgebildet.

Damit werden ineinandergreifende Lappen 8 geschaffen, die an ihren Enden in bekannter Weise Mittel 4, wie z.B. Ösen, Schlaufen, Haken, etc. aufweisen, durch die das Schuhband 3 geführt wird. Weiters weist der Schuh zusätzliche Mittel 9, wie z.B. entlang der Linie 9' aufgenähte, geklebte oder genietete Lappen auf, die ebenfalls mit Mitteln 4 zur Führung des Schuhbandes ausgebildet sind. Folgt man dem Schuhband 3 in Richtung der Pfeile, so erkennt man, dass zumindest im Rist- und Ballenbereich durch die Lappen 8 und die zusätzlichen Mittel 9 keine Kreuzungspunkte vorhanden sind, der Schuh aber trotzdem zusammengezogen werden kann.

Dieses Schnürsystem kann für alle Arten von Schnürschuhen, d.h. für Halbschuhe, Bergschuhe, Stiefel, Sportschuhe, wie z.B. Langlaufschuhe, aber auch für Schuhe aus hartem Kunststoff, die mit Innenschuhen versehen sind, wie z.B. Innenschuhe für Skischuhe, Verwendung finden.

## Patentansprüche

1. Schnürsystem für Schuhe aller Art mit einem Schuhband (3), wobei zwei Enden (3') zum Zusammenziehen des Schuhs vorgesehen sind und der Verlauf des Schuhbandes (3) zumindest im Rist- und Ballenbereich kreuzungsfrei ist, wobei die stirnseitige Öffnung (6) zum Einstieg in den Schuh mäanderförmigen Verlauf aufweist und die Öffnung (6) zum Einstieg in den Schuh ineinandergreifende Lappen (8) aufweist, **dadurch gekennzeichnet, dass** die ineinandergreifenden Lappen (8) im Bereich der Wurzeln Lappen (9) od. dgl. mit Umlenkelementen zur Führung des Schuhbandes (3) aufweisen.

2. Schuh nach Anspruch 1, **dadurch gekennzeichnet, dass** die ineinandergreifenden Lappen an ihren Enden Führungselemente (4) zur Umlenkung des Schuhbandes (3) aufweisen.

## Claims

1. A lacing system for shoes of all types with a shoelace (3) wherein two ends (3') are provided for tightening the shoe and the course of the shoelace (3) is free of intersections, at least in the region of the instep and ball of the foot, wherein the front opening (6) for entry into the shoe has a serpentine shape and the opening (6) for entry into the shoe has meshing lobes (8), **characterised in that** the meshing lobes (8) have lobes (9) or the like in the region of the roots with redirecting elements for guiding the shoelace (3).

2. A shoe as claimed in Claim 1, **characterised in that** the meshing lobes have guide elements (4) at their ends for redirecting the shoelace (3).

## Revendications

1. Un système de laçage pour chaussures de toutes sortes, comprenant un lacet (3), deux extrémités (3 ') étant prévues pour serrer la chaussure, et dans lequel le trajet du lacet (3) est au moins dans la zone du cou-de-pied de de la plante antérieure (8) libre de croisements, dans lequel l'ouverture (6) sur le côté avant pour accéder à l'intérieur de la chaussure présente un profil sinueux, et l'ouverture (6) pour accéder à l'intérieur de la chaussure comporte des languettes (8) qui s'emboîtent l'une dans l'autre, **caractérisé en ce que** les languettes qui s'emboîtent l'une dans l'autre (8) sont pourvues de pattes (9) ou similaires dans la région de leurs racines ayant des éléments de déviation pour guider le lacet (3).

2. Chaussure selon la revendication 1, **caractérisée en ce que** les languettes qui s'emboîtent l'une dans l'autre (8) présentent des éléments de guidage (4) à leurs extrémités pour dévier le lacet (3).
